# DEMANDE DE BREVET EUROPEEN

(11) **EP 2 012 504 A1**
(43) Date de publication de la demande: **07.01.2009**
(21) Numéro de dépôt: 07290838.7
(22) Date de dépôt: 03.07.2007
(51) Int. Cl.: H04M 1/02, H04M 1/03, H04R 1/10

(54) **Dispositif portable de communication téléphonique sans fil, tel qu'une oreillette, muni d'un connecteur rétractable**

(71) Demandeur: Modelabs Technologies Limited, Hong Kong (HK)
(72) Inventeur: Piocelle, Thierry, 33380 Mios (FR); Marie, Claude, 78310 Maurepas (FR); Rousselle, Nicolas, 85230 Bouin (FR)
(74) Mandataire: Kedinger, Jean-Paul

(57) **Abrégé**

La présente invention se rapporte à un dispositif de communication téléphonique sans fil (10), tel qu'une oreillette, destiné à être disposé contre ou dans l'oreille d'un utilisateur et comportant un boîtier creux (12) s'étendant selon un axe d'allongement (XX'), un connecteur (13) disposé à une extrémité (12a) du boîtier (12) et conçu pour être relié à un équipement électrique ou électronique, et un organe de reproduction sonore (14) lié au boîtier creux (12) et destiné à être introduit dans le pavillon de l'oreille, caractérisé en ce que l'organe de reproduction sonore (12) est articulé sur un axe de pivotement (ZZ') sensiblement perpendiculaire à l'axe d'allongement (XX') du boîtier (12) de manière à pouvoir passer d'une première position dans laquelle l'organe de reproduction sonore (14) est disposé à l'intérieur du boîtier creux (12) et le connecteur (13) fait saillie à l'extérieur de ce dernier, à une seconde position dans laquelle l'organe de reproduction sonore (14) est dressé sensiblement perpendiculairement au boîtier (12) afin de pouvoir être introduit dans le pavillon de l'oreille et le connecteur (13) est rétracté à l'intérieur du boîtier.

## Description

La présente invention concerne un dispositif portable de communication téléphonique sans fil, tel qu'une oreillette, destiné à être disposé contre ou dans l'oreille d'un utilisateur et comportant un organe de reproduction sonore et un connecteur.

Actuellement, les oreillettes pour téléphone cellulaire du commerce comportent un boîtier renfermant des composants électroniques, un organe de reproduction sonore, tel qu'un haut parleur, et parfois un connecteur utilisé par exemple pour la recharge ou pour une connexion avec un appareil tel qu'un téléphone cellulaire.

Or, ces oreillettes sont peu ergonomiques, peu esthétiques et leur encombrement est encore trop important. Par ailleurs, l'implantation du haut-parleur et du connecteur, lorsque ce dernier est présent, n'est pas optimisée.

Un but de la présente invention est donc de résoudre le problème cité précédemment à l'aide d'une solution simple à mettre en oeuvre, fiable et peu coûteuse.

Ainsi, la présente invention a pour objet un dispositif portable de communication téléphonique sans fil, tel qu'une oreillette, destiné à être disposé contre ou dans l'oreille d'un utilisateur et comportant .
- un boîtier creux s'étendant selon un axe d'allongement et renfermant des composants nécessaires au fonctionnement dudit dispositif, tels qu'une carte électronique,
- un connecteur disposé à une extrémité du boîtier creux et conçu pour être relié à un équipement électrique ou électronique, par exemple un ordinateur, un socle de chargement électrique, ou un téléphone cellulaire, et
- un organe de reproduction sonore lié au boîtier creux et destiné à être introduit dans le pavillon de l'oreille de l'utilisateur,
caractérisé en ce que l'organe de reproduction sonore est articulé, au niveau d'une extrémité du boîtier creux, sur un axe de pivotement sensiblement perpendiculaire à l'axe d'allongement dudit boîtier creux de manière à pouvoir passer d'une première position dans laquelle l'organe de reproduction sonore est disposé à l'intérieur du boîtier creux et le connecteur fait saillie à l'extérieur de ce dernier, à une seconde position dans laquelle l'organe de reproduction sonore est dressé sensiblement perpendiculairement au boîtier creux afin de pouvoir être introduit dans le pavillon de l'oreille et le connecteur est entièrement rétracté à l'intérieur du boîtier creux.

Selon des modes de réalisation préférés, le dispositif selon la présente invention peut comprendre en outre l'une au moins des caractéristiques suivantes :
- le dispositif comporte une pièce mobile supportant les composants fonctionnels et reliée, au niveau d'une de ses extrémités, à l'organe de reproduction sonore et, au niveau de l'extrémité opposée, au connecteur, ladite pièce mobile de support étant montée coulissante à l'intérieur du boîtier creux de sorte que son déplacement longitudinal dans ce dernier provoque le pivotement de l'organe de reproduction sonore et la rentré ou la sortie du connecteur ;
- la pièce mobile de support est munie, à une extrémité, de glissières de guidage à l'intérieur desquelles sont introduits des tétons solidaires de l'organe de reproduction sonore ;
- le boîtier creux présente une ouverture ménagée sur une de ses faces externes et la pièce mobile de support comporte une protubérance de manipulation manuelle accessible depuis l'extérieur dudit boîtier par l'utilisateur afin de faire passer l'organe de reproduction sonore d'une position à l'autre ;
- un arbre d'articulation coaxial à l'axe de pivotement est logé dans une protubérance faisant saillie sur une face externe du boîtier creux pour la rotation de l'organe de reproduction sonore ;
- le connecteur est de type USB ; et
- le dispositif comporte un logement pour une carte mémoire.

L'invention va maintenant être décrite plus en détail en référence à des modes de réalisation particuliers donnés à titre d'illustration uniquement et représentés sur les figures annexées dans lesquelles :
- la figure 1 est une vue de côté d'une oreillette conforme à la présente invention et comportant un haut-parleur disposé dans une position d'utilisation et un connecteur USB disposé dans une position rétractée de repos;
- la figure 2 est une vue de côté d'une étape intermédiaire de passage du haut-parleur de la position d'utilisation à une position de stockage et de passage du connecteur USB de la position rétractée de repos à une position sortie d'utilisation ; et
- la figure 3 est une vue de côté de l'oreillette avec le haut-parleur en position rétractée de repos et le connecteur USB dans la position sortie d'utilisation.

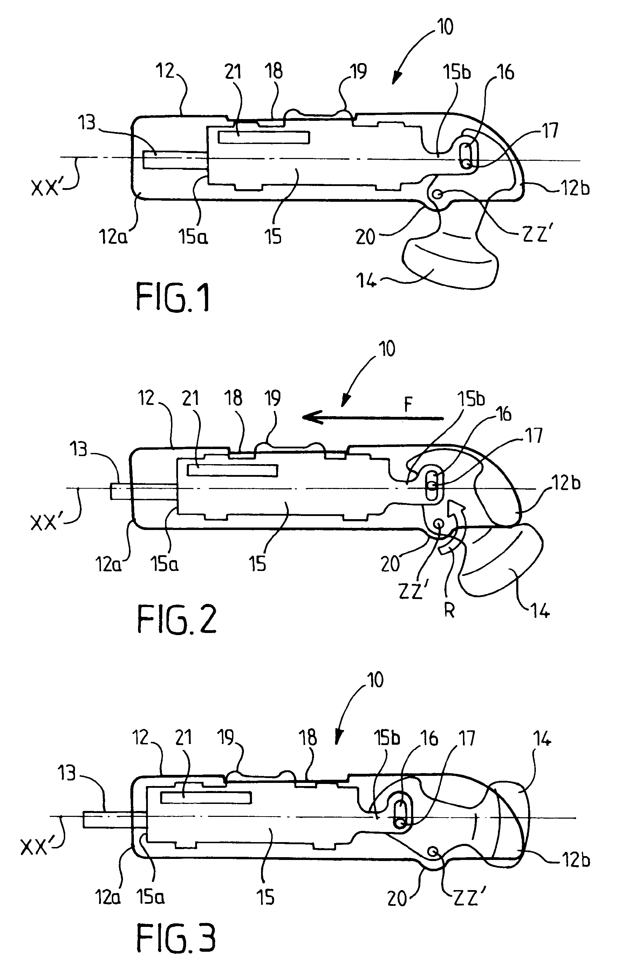

La figure 1 représente, vue de côté, une oreillette 10 conforme à la présente invention.

Cette oreillette 10 comporte un boîtier creux 12 en matière plastique, ici transparente pour pouvoir visualiser les mouvements des différentes pièces mobiles se déplaçant à l'intérieur de ce dernier.

Le boîtier creux 12 présente un axe d'allongement XX' et renferme une pièce mobile de support 15 déplaçable linéairement le long de l'axe d'allongement XX'.

La pièce mobile de support 15 loge des composants (non représentés) nécessaires au fonctionnement de l'oreillette, tel qu'une carte électronique de pilotage, et comporte, à une première extrémité 15a, un connecteur de type USB 13 (Universal Serial Bus) et, à l'autre extrémité 15b, un haut-parleur 14.

Le connecteur USB 13 est disposé au niveau d'une extrémité 12a du boîtier creux 12. Ce connecteur est conçu pour être relié à un équipement électrique ou électronique, par exemple un ordinateur, un socle de chargement électrique, ou un téléphone cellulaire.

Le haut-parleur 14 est articulé, au niveau de l'extrémité 12b du boîtier creux 12, sur un axe ZZ' perpendiculaire à l'axe d'allongement XX' dudit boîtier 12. Plus précisément, le haut-parleur 14 est articulé sur une tige métallique incorporée dans une protubérance 20 faisant saillie sur une face externe du boîtier.

Le haut-parleur 14 est également relié à la pièce mobile de support 15 par l'intermédiaire de tétons 17 introduits dans des glissières de guidage 16 ménagées à l'extrémité 15b de ladite pièce de support.

La pièce mobile de support 15 comporte en outre une protubérance 19 logée dans une ouverture 18 ménagée dans une face externe du boîtier creux 12. Cette protubérance 19, accessible depuis l'extérieur du boîtier et munie de crans, permet à l'utilisateur de manipuler manuellement la pièce mobile de support 15 pour déplacer cette dernière alternativement le long de l'axe d'allongement XX' dudit boîtier afin de provoquer la sortie du connecteur USB 13/la rétractation du haut-parleur 14 ou la sortie du haut-parleur 14/la rétractation du connecteur USB 13.

La pièce mobile de support 15 comporte également un logement 21 pour une carte mémoire de type connu, notamment au format MMC, SD, micro SD ou autres formats équivalents.

Ainsi, sur la figure 1, le haut-parleur 14 est totalement sortie du boîtier creux 12 et se dresse sensiblement perpendiculairement à ce dernier afin de pouvoir être introduit dans l'oreille d'un utilisateur.

Sur la figure 2, l'utilisateur a commencé à déplacer la pièce mobile de support 15 vers la gauche, selon la flèche F, afin d'une part de faire pivoter le haut-parleur 14 sur son axe ZZ' selon la flèche R pour le rétracter à l'intérieur du boîtier creux 12, et, d'autre part, pour faire sortir le connecteur 13 hors dudit boîtier, le long de son axe d'allongement XX'.

Sur la figure 3, la pièce mobile de support 15 est complètement déplacée vers la gauche à l'intérieur du boîtier creux 12 de sorte que le haut-parleur 14 est entièrement rétracté dans ledit boîtier tandis que le connecteur 13 est entièrement sortie pour pouvoir être relié par exemple à un chargeur électrique.

Ainsi, l'oreillette de la présente invention est particulièrement ergonomique, simple à utiliser et présente un encombrement réduit puisque dans une position, le haut-parleur 14 est intégralement contenu dans l'encombrement radial du boîtier creux 12.

Il va de soi que la description détaillée de l'objet de l'Invention, donnée uniquement à titre d'illustration, ne constitue en aucune manière une limitation, les équivalents techniques étant également compris dans le champ de la présente invention.

## Revendications

1. Dispositif portable de communication téléphonique sans fil (10), tel qu'une oreillette, destiné à être disposé contre ou dans l'oreille d'un utilisateur et comportant :
- un boîtier creux (12) s'étendant selon un axe d'allongement (XX') et renfermant des composants nécessaires au fonctionnement dudit dispositif, tels qu'une carte électronique,
- un connecteur (13) disposé à une extrémité (12a) du boîtier creux (12) et conçu pour être relié à un équipement électrique ou électronique, par exemple un ordinateur, un socle de chargement électrique, ou un téléphone cellulaire, et
- un organe de reproduction sonore (14) lié au boîtier creux (12) et destiné à être introduit dans le pavillon de l'oreille de l'utilisateur,
**caractérisé en ce que** l'organe de reproduction sonore (12) est articulé, au niveau d'une extrémité (12b) du boîtier creux, sur un axe de pivotement (ZZ') sensiblement perpendiculaire à l'axe d'allongement (XX') dudit boîtier creux (12) de manière à pouvoir passer d'une première position dans laquelle l'organe de reproduction sonore (14) est disposé à l'intérieur du boîtier creux (12) et le connecteur (13) fait saillie à l'extérieur de ce dernier, à une seconde position dans laquelle l'organe de reproduction sonore (14) est dressé sensiblement perpendiculairement au boîtier creux (12) afin de pouvoir être introduit dans le pavillon de l'oreille et le connecteur (13) est entièrement rétracté à l'intérieur du boîtier creux (12).

2. Dispositif selon la revendication 1, **caractérisé en ce qu'**il comporte une pièce mobile (15) supportant les composants fonctionnels et reliée, au niveau d'une de ses extrémités (15b), à l'organe de reproduction sonore (14) et, au niveau de l'extrémité opposée (15a), au connecteur (13), ladite pièce mobile de support (15) étant montée coulissante à l'intérieur du boîtier creux (12) de sorte que son déplacement longitudinal dans ce dernier provoque le pivotement de l'organe de reproduction sonore (14) et la rentré ou la sortie du connecteur (13).

3. Dispositif selon la revendication 2, **caractérisé en ce que** la pièce mobile de support (15) est munie, à une extrémité (15b), de glissières de guidage (16) à l'intérieur desquelles sont introduits des tétons (17) solidaires de l'organe de reproduction sonore (14).

4. Dispositif selon la revendication 2 ou 3, **caractérisé en ce que** le boîtier creux (12) présente une ouverture (18) ménagée sur une de ses faces externes et la pièce mobile de support (15) comporte une protubérance de manipulation manuelle (19) accessible depuis l'extérieur dudit boîtier par l'utilisateur afin de faire passer l'organe de reproduction sonore (14) d'une position à l'autre.

5. Dispositif selon l'une quelconque des revendications précédentes, **caractérisé en ce qu'**un arbre d'articulation coaxial à l'axe de pivotement (ZZ') est logé dans une protubérance (20) faisant saillie sur une face externe du boîtier creux (12) pour la rotation de l'organe de reproduction sonore (14).

6. Dispositif selon l'une quelconque des revendications précédentes, **caractérisé en ce que** le connecteur (13) est de type USB.

7. Dispositif selon l'une quelconque des revendications précédentes, **caractérisé en ce qu'**il comporte un logement (21) pour une carte mémoire.
